# EUROPÄISCHE PATENTSCHRIFT

(11) **EP 1 703 617 B1**
(45) Veröffentlichungstag und Bekanntmachung des Hinweises auf die Patenterteilung: **20.04.2016**
(21) Anmeldenummer: 05024167.8
(22) Anmeldetag: 05.11.2005
(51) Int. Cl.: H02K 5/22, H02K 11/04, H02K 5/14, H02K 41/025

(54) **Elektrischer Antrieb**
Electric drive
Entraînement électrique

(30) Priorität: 18.03.2005 DE 102005012620
(43) Veröffentlichungstag der Anmeldung: 20.09.2006
(73) Patentinhaber: Bühler Motor GmbH, 90459 Nürnberg (DE)
(72) Erfinder: Guttenberger, Richard, 91171 Greding (DE)

(56) Entgegenhaltungen:
- EP-A1- 0 818 872
- EP-A2- 1 231 700
- WO-A1-02/075899
- DE-A1- 19 532 265
- DE-A1- 19 925 321

## Beschreibung

Die Erfindung betrifft einen elektrischen Antrieb, mit Bauteilen, die über zumindest eine Schnappverbindung mit einem auslenkbaren Rastmittel, das an einem äußeren Bereich des elektrischen Antriebs vorspringend angeordnet ist, miteinander verbunden sind, welches durch eine Schutzeinrichtung gegen unbeabsichtigtes Auslenken des Rastmittels und damit Lösen der Schnappverbindung geschützt ist, wobei die Schutzeinrichtung einstückig mit einem der miteinander zu verbindenden Bauteile ist.

Die DE 199 25 321 A1 zeigt eine elektrische Maschine mit einem Anschlusskabel, dass in einen Stecker der elektrischen Maschine steckbar und darin verriegelbar ist. Die Verriegelung ist gegen unbeabsichtigtes Lösen durch eine Schutzvorrichtung gesichert. Der Stecker des Anschlusskabels, die Rast- und die Schutzvorrichtung sind einstückig und bestehen aus einem Kunststoffmaterial. Daher kann die Schutzvorrichtung die Verbindung nur gegen leichte mechanische Belastungen absichern.

In der WO 02/075899 A1 wird ein elektrischer Stellantrieb beschrieben, dessen beide Gehäusehälften über Schnappverbindungen miteinander verbunden sind.

Aus der DE 198 13 039 B4 ist ein Stellantrieb bekannt, bei dem zwei Bauteile vorhanden sind, die über mehrere Schnappverbindungen miteinander verbunden sind. Die Schnappverbindung besteht aus Rastnasen und Rastösen, die völlig ungeschützt sind uns somit Beschädigungen bei der Handhabung und Montage nicht ausgeschlossen werden können. Ein Lösen der Verbindung wird allerdings durch die Mehrzahl der Schnappmittel kaum ungewollt möglich sein. Es sind aber auch Anwendungen bekannt, bei denen nur wenige oder gar nur ein Schnappmittel vorhanden sind/ist, wobei ein versehentliches Lösen oder eine Beschädigung der Schnappmittel gravierende Folgen haben kann. Aus dem Stand der Technik sind auch Sicherungsmöglichkeiten bekannt, die ein Lösen der Schnappverbindung verhindern, diese sind jedoch sehr aufwändig gestaltet und unwirtschaftlich herstellbar.

Aufgabe der Erfindung ist es daher einen Elektrischer Antrieb darzustellen, der auf wirtschaftliche Weise ohne zusätzliche Bauteile und ohne komplizierte Fertigungseinrichtungen sicher montiert und gehandhabt werden kann.

Diese Aufgabe wird erfindungsgemäß durch Anspruch 1 und Anspruch 3 gelöst. Bei der Montage von Elektromotoren, Getriebemotoren oder Stellantrieben dürfen keine Bauteile beschädigt oder versehentlich demontierbar sein. Dies wird durch die Schutzeinrichtung gewährleistet, welche die sensiblen auslenkbaren Rastmittel so abschirmen, dass eine Auslenkung kaum möglich ist. Damit keine zusätzlichen Teile für die Schutzeinrichtung benötigt werden ist vorgesehen diese einstückig mit zumindest einem der miteinander zu verbindenden Bauteile auszubilden. Vorzugsweise wird die Schutzeinrichtung (6) durch Urformen mit zumindest einem der miteinander zu verbindenden Bauteile (3, 4) mitgeformt. Dies ist insbesondere bei Verwendung von Kunststoffspritzguss- oder ein Metalldruckgussteilen möglich. Alternativ kann die Schutzeinrichtung auch durch Umformen mit zumindest einem der miteinander zu verbindenden Bauteile (3, 4) mitgeformt werden, z.B. wenn das entsprechende Bauteil ein Stanzbiegeteil ist.

Weiterbildungen der Erfindung werden in den Unteransprüchen dargestellt. Da die Schutzeinrichtung stabil und robust ausgeführt sein muss, um die gewünschten Anforderungen zu erfüllen, ist es zweckmäßig sie zusammen mit einem feststehenden Rastmittel am gleichen Bauteil einstückig auszubilden. Das feststehende Bauteil kann eine Rastnase sein oder auch aus mehreren Rastnasen oder aus einer Rastausnehmung bestehen.

Eine möglichst einfache Form der Schutzeinrichtung und damit wirtschaftlich herstellbar ist die Schutzeinrichtung (6) in Form einer Brücke (10), welche die zumindest eine Rastnase oder Rastausnehmung unter Beibehaltung eines Freiraums (8) überbrückt.

Damit bei Verwendung eines Urfomverfahrens eine Entformung wirtschaftlich möglich ist, ist in der brückenartigen Schutzeinrichtung (6) eine mit der zumindest einen Rastnase korrespondierende Freisparung (9) ausgenommen.

Weil das Bauteil (3, 4), das zumindest ein auslenkbares Rastmittel (5) aufweist, elastisch sein muss ist vorgesehen dieses als einstückiges Kunststoffspritzgussteil auszuführen. Um dabei für eine ausreichende Festigkeit zu sorgen wird faserverstärktes Kunststoffmaterial verwendet.

Das auslenkbare Rastmittel (5) kann als zumindest eine Rastöse ausgebildet und hintergreift im montierten Zustand die zumindest eine Rastnase formschlüssig. Ebenso kann das auslenkbare Rastmittel (5) auch als zumindest eine Rastnase ausgebildet sein.

Besonders vorteilhaft ist es, wenn die Schutzeinrichtung (6) im montierten Zustand, eine größere Ausdehnung als das auslenkbare Rastmittel aufweist und zumindest im Bereich deren größten Auslenkbarkeit , also an ihrem Endbereich diese in Fügerichtung und/oder Auslenkrichtung überragt. So ist sichergestellt, dass stets die Schutzeinrichtung während der Handhabung oder Montage mit Wänden oder anderen Bauteilen in Berührung kommt und nicht das auslenkbare Rastmittel.

Das Bauteil (3, 4) mit dem auslenkbaren Rastmittel (5) kann beispielhaft mit einem Stecker oder Steckergehäuse (11) einstückig sein. Für beide Funktionen ist Kunststoffmaterial verwendbar, einerseits wegen seiner elastischen und andererseits wegen seiner isolierenden Eigenschaften.

Die Schnappverbindung kann dafür vorgesehen sein eine Dichtung (12), die zwischen den beiden miteinander zu verbindenden Bauteilen (3, 4) angeordnet ist und diese abdichtet, zusammenzudrücken. Dann ist es besonders wichtig eine sichere Verbindung zu gewährleisten.

Eines der miteinander zu verbindenden Bauteile (3, 4) kann einstückig mit einer Bürstenbrücke eines Kommutatormotors sein. Eine Leiterplatte, die elektrisch und mechanisch mit Steckfahnen (14) verbunden ist, welche durch Ausnehmungen (15) in das Steckergehäuse (11) hineinragen lässt sich durch die zu verbindenden Bauteile ebenfalls aufnahmen. Dabei kann die Leiterplatte (13) unmittelbar elektrisch mit einem der miteinander zu verbindenden Bauteile (3, 4) verbunden sein, wobei die Leiterplatte beidseitig bestückt sein kann und über ihre Leiterbahnen eine elektrische Verbindung zwischen Steckfahnen und Bürsten des Kommutatormotors herstellbar ist.

Es ist denkbar, dass zumindest eines der beiden miteinander zu verbindenden Bauteile ein Gehäuseteil ist. Auch beide Bauteile können Gehäuseteile sein oder nur zum Teil als Gehäuse dienen, z.B. einerseits als Elektronikgehäuse und andererseits als Bürstenbrücke.

Andererseits kann eines der miteinander zu verbindenden Bauteile (3, 4) auch ein Lagerschild eines Elektromotors oder Getriebemotors sein.

Ein Ausführungsbeispiel der Erfindung wird nachfolgend anhand eines Ausführungsbeispiels näher erläutert. Es zeigen:
- Fig. 1: einen erste räumliche Ansicht eines elektrischen Antriebs,
- Fig. 2: eine zweite räumliche Ansicht des elektrischen Antriebs,
- Fig. 3: eine dritte räumliche Ansicht des elektrischen Antriebs,
- Fig. 4: eine räumliche Darstellung eines als Bürstenbrücke ausgebildeten ersten Bauteils montiert an einem als Lagerschild ausgebildeten zweiten Bauteil,
- Fig. 5: eine räumliche Darstellung des als Lagerschild ausgebildeten zweiten Bauteils,
- Fig. 6: eine weitere räumliche Darstellung des zweiten Bauteils,
- Fig. 7: eine räumliche Darstellung der Bürstenbrücke und
- Fig. 8: u. 9 eine Leiterplatte.

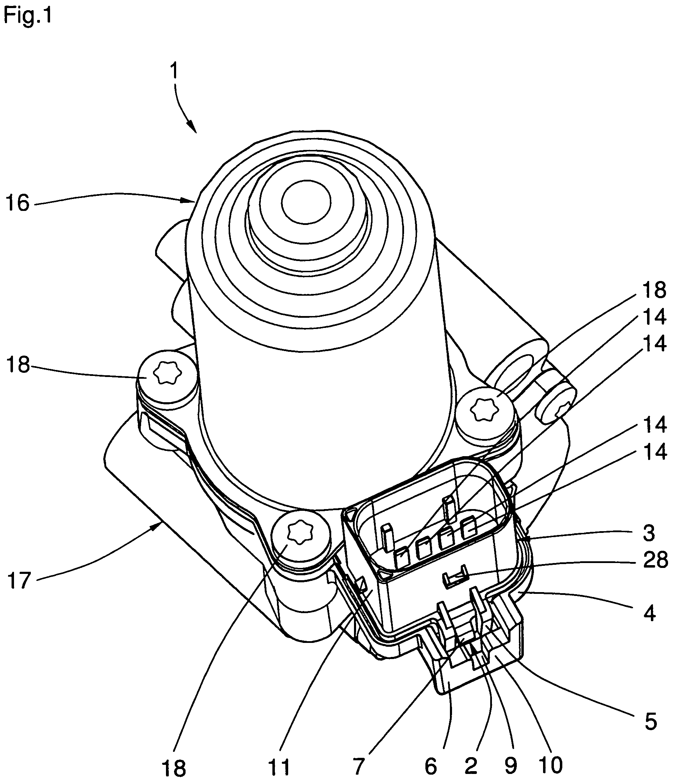

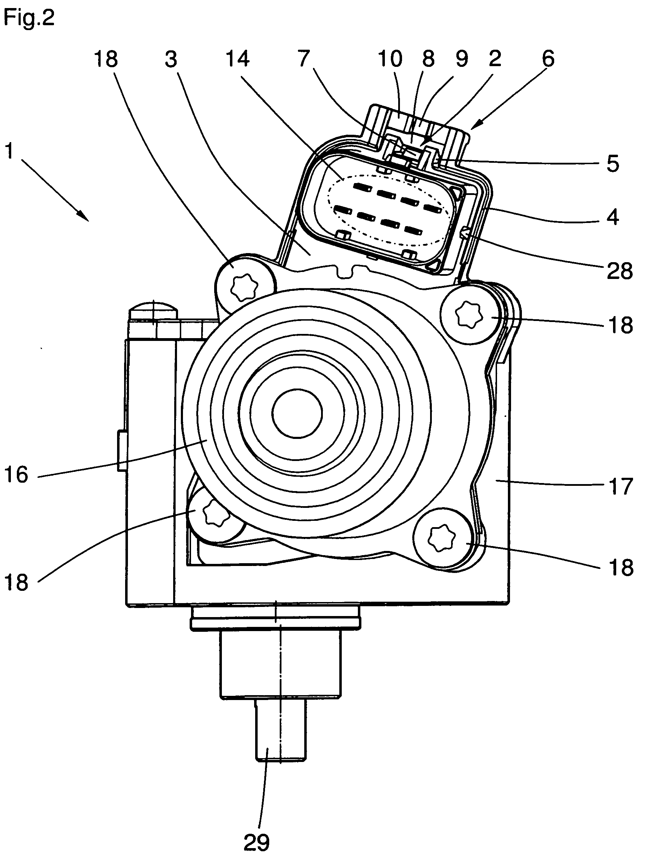

Fig.1 zeigt eine erste räumliche Ansicht eines elektrischen Antrieb 1, mit einem als Bürstenbrücke ausgebildeten ersten Bauteil 3, einem als Lagerschild ausgebildeten zweiten Bauteil 4. Die Bürstenbrücke ist zwischen dem Gehäuse 16 eines Elektromotors und dem Lagerschild 4 sandwichartig angeordnet, welches mit einem Getriebegehäuse 17 mechanisch verbunden ist. Das Motorgehäuse 16, die Bürstenbrücke 3, das Lagerschild 4 und das Getriebegehäuse 17 sind teilweise über Befestigungsschrauben 18 und im Bereich eines einstückig mit der Bürstenbrücke geformten Steckergehäuses 11 über eine Schnappverbindung 2 miteinander verbunden. Im Steckergehäuse sind Anschlussfahnen 14 angeordnet, die zum Anschluss des elektrischen Antriebs 1 an eine Versorgungsspannungsquelle dienen. Die Schnappverbindung 2 besteht aus einer lagerschildfesten Rastnase 7 und einer bürstenbrückenfesten Rastöse 5, welche auslenkbar ist und mit der Rastnase 7 verschnappt ist. Damit die Rastverbindung 2 nicht bei der Montage des elektrischen Antriebs oder seiner Handhabung unbeabsichtigt gelöst oder beschädigt wird ist eine Schutzeinrichtung 6 vorgesehen. Um die Auslenkung der Rastöse 5 zu ermöglichen ist die Schutzeinrichtung 6 mit einem Freiraum 8 versehen (Fig.2). Die Schutzeinrichtung 6 ist in Form einer Brücke 10 gebildet, die einstückig mit dem Lagerschild mitaeformt ist. Aus formtechnischen Gründen ist in der Brücke 10 eine mit der Rastnase 7 korrespondierende Freisparung (9) vorgesehen. Die Brücke ist so geformt, dass ihre Stützpfeiler zunächst radial aus der Bürstenbrücke 3 vorspringen und das Querjoch sich L-förmig in Axialrichtung erstreckt und die Rastöse 5 auf diese Weise überdeckt.

Fig. 2 zeigt eine zweite räumliche Ansicht des elektrischen Antriebs 1, mit der Bürstenbrücke 3, dem Lagerschild 4, dem Motorgehäuse 16, dem Getriebegehäuse 17 und einer Ausgangswelle 29. Hier ist die Schutzeinrichtung 6 mit dem Freiraum 8 zwischen der Brücke 10 und der Schnappverbindung 2 deutlicher erkennbar.

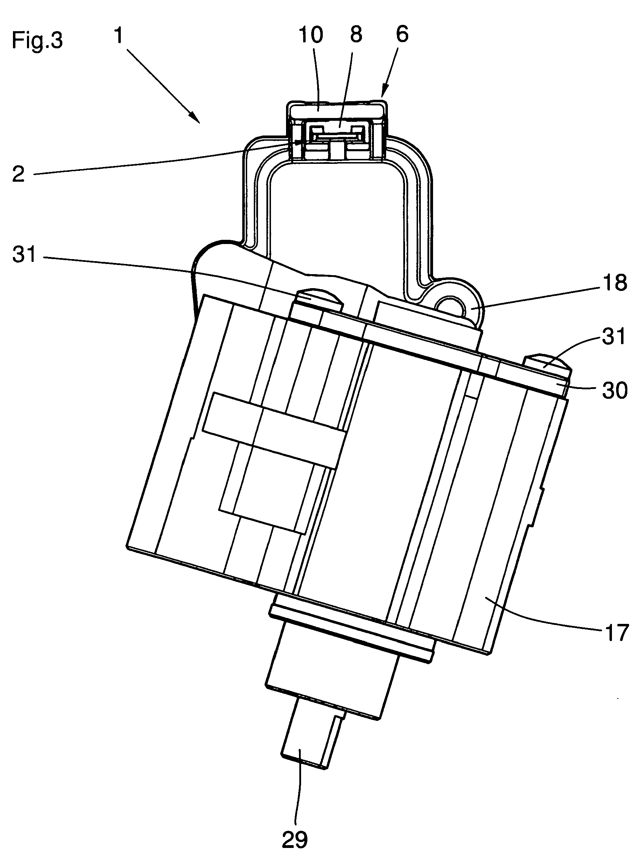

Fig. 3 zeigt eine dritte räumliche Ansicht des Elektrischen Antriebs 1, mit der Schutzeinrichtung 6 für die Schnappverbindung 2, dem Getriebegehäuse 17 mit einem Getriebegehäusedeckel 30, der mit Getriebegehäuseschrauben 31 am Getriebegehäuse 17 befestigt ist und der Ausgangswelle 29.

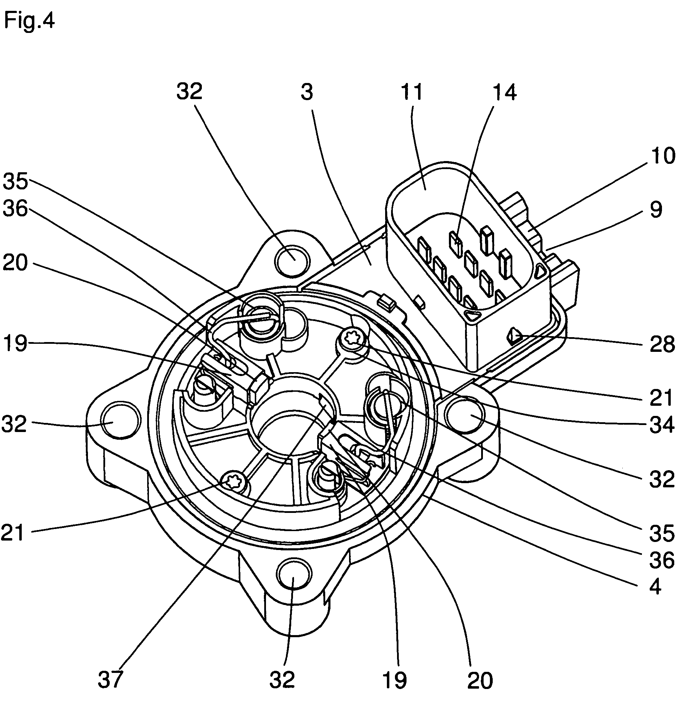

Fig. 4 zeigt eine erste räumliche Darstellung eines als Bürstenbrücke ausgebildeten ersten Bauteils 3 montiert an einem als Lagerschild ausgebildeten zweiten Bauteil 4, mit dem Steckergehäuse 11, den Steckfahnen 14, der Brücke 10 und der Freisparung 9. Die Bürstenbrücke 3 ist mittels Montageschrauben 21 am Lagerschild 4 befestigt und mit Bürstenköchern 19 versehen, die zur Führung von Kohlebürsten 20 dienen. Der Lagerschild 4 weist Befestigungsausnehmungen 32 zur Aufnahme der Befestigungsschrauben 18 auf. Die Bürstenbrücke 3 ist mit Drosselspulen 36 bestückt, die einerseits mit Kontaktpunkten 24 der Leiterplatte 13 und andererseits mit Kohlelitzen 37 elektrisch verbunden sind. In der Bürstenbrücke 3 ist eine Sensorfreisparung 38 vorgesehen, um den Sensor näher an ein auf der Motorwelle angeordnetes Polrad anordnen zu können.

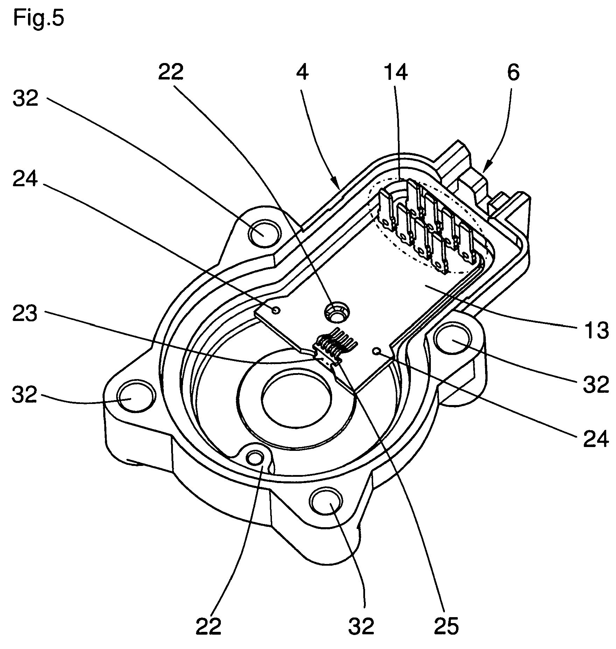

Fig. 5 zeigt eine räumliche Darstellung des als Lagerschild ausgebildeten zweiten Bauteils 4, das mit einer Leiterplatte 13 versehen ist, deren Masseleiterbahn elektrisch mit einem Anschraubdom 22 und damit mit dem Lagerschild verbunden ist. Die Leiterplatte dient zur elektrischen Verbindung der Steckfahnen 14 mit den Kohlebürsten (Kontaktpunkte 24) und einem Sensor 23, z.B. einem Hallsensor zur Detektierung des alternierenden Magnetfelds eines rotierenden Polrads (nicht dargestellt). Der Sensor 23 ist in eine Sensorausnehmung 25 der Leiterplatte 13 mechanisch befestigt. Der Sensor 23 ist an einer Stirnseite der Leiterplatte 13 angeordnet, welche somit auf drei Seiten mit Bauteilen bestückt ist.

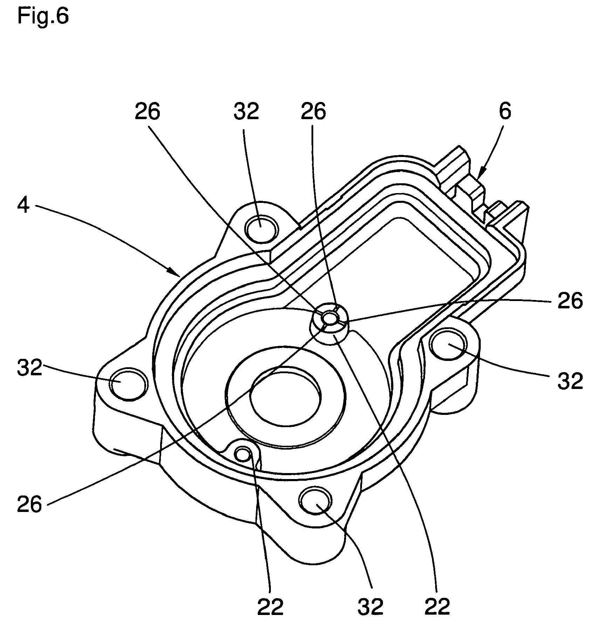

Fig. 6 zeigt eine weitere räumliche Darstellung des zweiten Bauteils 4 ohne Leiterplatte, wobei der Anschraubdom 22, der mit der Masseleiterbahn 27 der Leiterplatte 13 elektrisch verbunden ist mit der Leiterplatte 13 zugewandten vorspringenden Kontaktrippen 26 geformt ist. Ein Anschraubdom 22 dient zur Befestigung sowohl der Leiterplatte als auch der Bürstenbrücke und ein Anschraubdom 22 nur zur Befestigung der Bürstenbrücke 3.

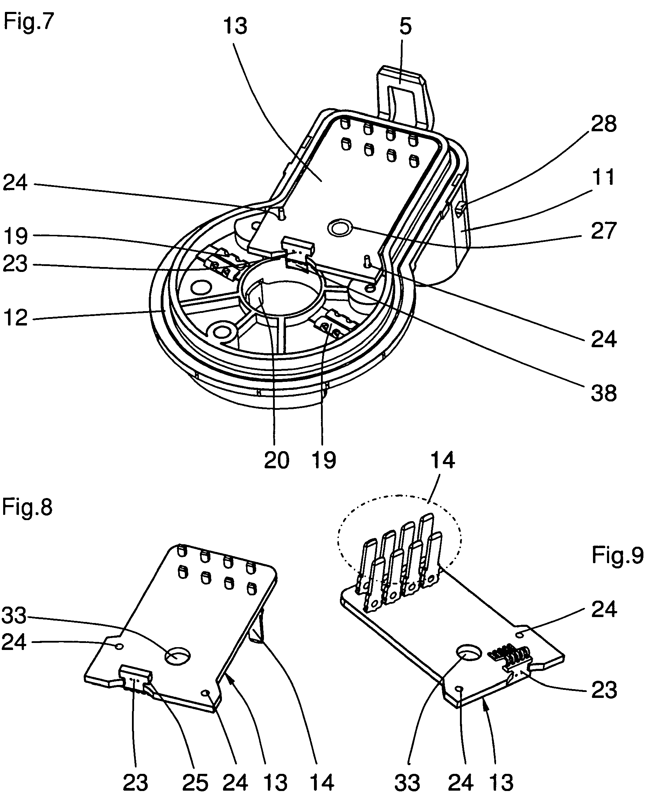

Fig. 7 zeigt eine räumliche Darstellung der Bürstenbrücke 3 mit Steckergehäuse 11, Schnappöse 5, Leiterplatte 13, Sensor 23, Masseleiterbahn 27, Kontaktpunkte 24, Bürstenköcher 19, Kohlebürsten 20 und Steckfahnen, die direkt mit der Leiterplatte 13 mechanisch und elektrisch verbunden sind. Das Steckergehäuse ist mit einem Rastmittel 28 geformt, das mit einem Gegenrastmittel in einem Zuleitungsstecker korrespondiert. In die Bürstenbrücke 3 ist eine umlaufende Dichtung 12 montiert, die den elektrischen Antrieb 1 gegenüber Umwelteinflüssen abdichtet. Die Schnappverbindung 2 dient dazu die Dichtwirkung der Dichtung 12 zu gewährleisten. Bei versehentlichem Lösen der Schnappverbindung 2 würde der elektrische Antrieb undicht werden.

Fig. 8 u. 9 zeigen die Leiterplatte 13, mit den Steckfahnen 14, dem Sensor 23, der in der Ausnehmung 25 mechanisch befestigt ist, den Kontaktstellen 24 und Befestigungsfreisparungen 33 für die Aufnahme der Montageschraube 21 und zur Befestigung am Anschraubdom 22.

### Bezugszeichenliste

- 1: elektrischer Antrieb
- 2: Schnappverbindung
- 3: erstes Bauteil/Bürstenbrücke
- 4: zweites Bauteil/Lagerschild
- 5: auslenkbares Rastmittel/Rastöse
- 6: Schutzeinrichtung
- 7: feststehendes Rastmittel/Rastnase
- 8: Freiraum
- 9: korrespondierende Freisparung
- 10: Brücke
- 11: Stecker/Steckergehäuse
- 12: Dichtung
- 13: Leiterplatte
- 14: Steckfahnen
- 15: Ausnehmung
- 16: Gehäusetopf
- 17: Getriebegehäuse
- 18: Befestigungsschraube
- 19: Bürstenköcher
- 20: Kohlebürste
- 21: Montageschraube
- 22: Anschraubdom
- 23: Sensor
- 24: Kontaktpunkt
- 25: Sensorausnehmung
- 26: Kontaktrippe
- 27: Masseleitung
- 28: Rastmittel
- 29: Ausgangswelle
- 30: Getriebegehäusedeckel
- 31: Getriebegehäuseschrauben
- 32: Befestigungsausnehmungen
- 33: Befestigungsfreisparung

## Patentansprüche

1. Elektrischer Antrieb (1), mit Bauteilen (3, 4), die über zumindest eine Schnappverbindung (2) mit einem auslenkbaren Rastmittel (5), das an einem äußeren Bereich des elektrischen Antriebs (1) vorspringend angeordnet ist, miteinander verbunden sind, welches durch eine Schutzeinrichtung (6) gegen unbeabsichtigtes Auslenken des Rastmittels (5) und damit Lösen der Schnappverbindung (2) geschützt ist, wobei die Schutzeinrichtung (6) einstückig mit einem der miteinander zu verbindenden Bauteile (3, 4) ist, wobei das auslenkbare Rastmittel (5) mit einer Bürstenbrücke eines Kommutatormotors und einem Stecker oder Steckergehäuse ein einstückiges Kunststoffspritzgussteil bildet, **dadurch gekennzeichnet, dass** die Schutzeinrichtung (6) mit einem feststehenden Rastmittel (7) und einem umgeformten Metalldruckguss-Gehäuseteil oder einem umgeformten Stanzbiege-Gehäuseteil einstückig ist.

2. Elektrischer Antrieb nach Anspruch 1, **dadurch gekennzeichnet, dass** die Schutzeinrichtung (6) in Form einer Brücke (10) ausgebildet ist, welche die zumindest eine Rastnase oder Rastausnehmung unter Beibehaltung eines Freiraums (8) überbrückt.

3. Elektrischer Antrieb (1), mit Bauteilen (3, 4), die über zumindest eine Schnappverbindung (2) mit einem auslenkbaren Rastmittel (5), das an einem äußeren Bereich des elektrischen Antriebs (1) vorspringend angeordnet ist, miteinander verbunden sind, welches durch eine Schutzeinrichtung (6) gegen unbeabsichtigtes Auslenken des Rastmittels (5) und damit Lösen der Schnappverbindung (2) geschützt ist, wobei die Schutzeinrichtung (6) einstückig mit einem der miteinander zu verbindenden Bauteile (3, 4) ist, wobei das auslenkbare Rastmittel (5) mit einem Stecker oder Steckergehäuse ein einstückiges Kunststoffspritzgussteil bildet, **dadurch gekennzeichnet, dass** die Schutzeinrichtung (6) mit einem feststehenden Rastmittel (7) und einem umgeformten Metalldruckguss-Gehäuseteil oder einem umgeformten Stanzbiege-Gehäuseteil einstückig ist und die Schutzeinrichtung (6) in Form einer Brücke (10) ausgebildet ist, welche das zumindest eine als eine Rastnase oder Rastausnehmung ausgebildete feststehende Rastmittel (7) unter Beibehaltung eines Freiraums (8) überbrückt.

4. Elektrischer Antrieb nach Anspruch 1, 2 oder 3, **dadurch gekennzeichnet, dass** das feststehende Rastmittel (7) zumindest eine Rastnase oder eine Rastausnehmung ist.

5. Elektrischer Antrieb nach Anspruch 1, 2, 3 oder 4, **dadurch gekennzeichnet, dass** in der brückenartigen Schutzeinrichtung (6) eine mit der zumindest einen Rastnase korrespondierende Freisparung (9) ausgenommen ist.

6. Elektrischer Antrieb nach Anspruch 1, 2, 3, 4 oder 5, **dadurch gekennzeichnet, dass** das Kunststoffspritzgussteil faserverstärkt ist.

7. Elektrischer Antrieb nach zumindest einem der vorangehenden Ansprüche, **dadurch gekennzeichnet, dass** das auslenkbare Rastmittel (5) als zumindest eine Rastöse ausgebildet ist und im montierten Zustand die zumindest eine Rastnase formschlüssig hintergreift.

8. Elektrischer Antrieb nach zumindest einem der vorangehenden Ansprüche, **dadurch gekennzeichnet, dass** das auslenkbare Rastmittel (5) als zumindest eine Rastnase ausgebildet ist.

9. Elektrischer Antrieb nach zumindest einem der vorangehenden Ansprüche, **dadurch gekennzeichnet, dass** die Schutzeinrichtung (6) im montierten Zustand, eine größere Ausdehnung als das auslenkbare Rastmittel aufweist und zumindest im Bereich deren größten Auslenkbarkeit , also an ihrem Endbereich diese in Fügerichtung und/oder Auslenkrichtung überragt.

10. Elektrischer Antrieb nach zumindest einem der vorangehenden Ansprüche, **dadurch gekennzeichnet, dass** eine Dichtung (12) zwischen den beiden miteinander zu verbindenden Bauteilen (3, 4) angeordnet ist und diese abdichtet, wobei die Schnappverbindung (2) die Dichtung (12) zwischen den beiden Bauteilen (3, 4) andrückt.

11. Elektrischer Antrieb nach zumindest einem der vorangehenden Ansprüche, **dadurch gekennzeichnet, dass** eines der miteinander zu verbindenden Bauteile (3, 4) einstückig mit einer Bürstenbrücke eines Kommutatormotors ist.

12. Elektrischer Antrieb nach zumindest einem der vorangehenden Ansprüche, **dadurch gekennzeichnet, dass** das Bauteil (3, 4) eine Leiterplatte (13) aufnimmt, die elektrisch und mechanisch mit Steckfahnen (14) verbunden ist, welche durch Ausnehmungen (15) in das Steckergehäuse (11) hineinragen.

13. Elektrischer Antrieb nach zumindest einem der vorangehenden Ansprüche, **dadurch gekennzeichnet, dass** die Leiterplatte (13) unmittelbar elektrisch mit einem der miteinander zu verbindenden Bauteile (3, 4) verbunden ist.

14. Elektrischer Antrieb nach zumindest einem der vorangehenden Ansprüche, **dadurch gekennzeichnet, dass** die Leiterplatte (13) beidseitig bestückt ist und über Leiterbahnen eine elektrische Verbindung zwischen Steckfahnen (14) und Bürsten des Kommutatormotors herstellt.

15. Elektrischer Antrieb nach zumindest einem der vorangehenden Ansprüche, **dadurch gekennzeichnet, dass** beide miteinander zu verbindenden Bauteile (3, 4) Gehäuseteile sind.

16. Elektrischer Antrieb nach zumindest einem der vorangehenden Ansprüche, **dadurch gekennzeichnet, dass** eines der miteinander zu verbindenden Bauteile ein Lagerschild ist.

## Claims

1. An electrical drive (1), with components (3, 4) which are connected together via at least one snap connection (2) with a deflectable latching means (5) which is arranged projecting on an outer region of the electrical drive (1), which means is protected against unintentional deflection of the latching means (5) and hence release of the snap connection (2) by a protection means (6), wherein the protection means (6) is in one piece with one of the components (3, 4) which are to be connected together, wherein the deflectable latching means (5) forms with a brush rocker of a commutator motor and a plug or plug housing a one-piece injection-moulded plastics material part, **characterised in that** the protection means (6) is in one piece with a fixed latching means (7) and a shaped diecast metal housing part or a shaped stamped-and-bent housing part.

2. An electrical drive according to Claim 1, **characterised in that** the protection means (6) is in the form of a bridge (10) which bridges the at least one latching nose or latching cutout, while maintaining a clearance (8).

3. An electrical drive (1), with components (3, 4) which are connected together via at least one snap connection (2) with a deflectable latching means (5) which is arranged projecting on an outer region of the electrical drive (1), which means is protected against unintentional deflection of the latching means (5) and hence release of the snap connection (2) by a protection means (6), wherein the protection means (6) is in one piece with one of the components (3, 4) which are to be connected together, wherein the deflectable latching means (5) forms with a plug or plug housing a one-piece injection-moulded plastics material part,
**characterised in that** the protection means (6) is in one piece with a fixed latching means (7) and a shaped diecast metal housing part or a shaped stamped-and-bent housing part, and the protection means (6) is in the form of a bridge (10) which bridges the at least one fixed latching means (7) which is formed as a latching nose or latching cutout, while maintaining a clearance (8).

4. An electrical drive according to Claim 1, 2 or 3, **characterised in that** the fixed latching means (7) is at least one latching nose or a latching cutout.

5. An electrical drive according to Claim 1, 2, 3 or 4, **characterised in that** a recess (9) which corresponds with the at least one latching nose is formed in the bridge-like protection means (6).

6. An electrical drive according to Claim 1, 2, 3, 4 or 5, **characterised in that** the injection-moulded plastics material part is fibre-reinforced.

7. An electrical drive according to at least one of the preceding claims, **characterised in that** the deflectable latching means (5) is formed as at least one latching eye and in the assembled state engages in positive manner behind the at least one latching nose.

8. An electrical drive according to at least one of the preceding claims, **characterised in that** the deflectable latching means (5) is formed as at least one latching nose.

9. An electrical drive according to at least one of the preceding claims, **characterised in that** the protection means (6) in the assembled state has a greater extent than the deflectable latching means and at least in the region of the greatest deflectability thereof, i.e. at its end region, projects over it in the joining direction and/or direction of deflection.

10. An electrical drive according to at least one of the preceding claims, **characterised in that** a seal (12) is arranged between the two components (3, 4) which are to be connected together and seals them off, the snap connection (2) pressing the seal (12) in contact between the two components (3, 4).

11. An electrical drive according to at least one of the preceding claims, **characterised in that** one of the components (3, 4) which are to be connected together is in one piece with a brush rocker of a commutator motor.

12. An electrical drive according to at least one of the preceding claims, **characterised in that** the component (3, 4) receives a printed circuit board (13) which is connected electrically and mechanically with tabs (14) which project through cutouts (15) into the plug housing (11).

13. An electrical drive according to at least one of the preceding claims, **characterised in that** the printed circuit board (13) is connected directly electrically to one of the components (3, 4) which are to be connected together.

14. An electrical drive according to at least one of the preceding claims, **characterised in that** the printed circuit board (13) is populated on both sides and produces an electrical connection between tabs (14) and brushes of the commutator motor via conductive tracks.

15. An electrical drive according to at least one of the preceding claims, **characterised in that** both the components (3, 4) which are to be connected together are housing parts.

16. An electrical drive according to at least one of the preceding claims, **characterised in that** one of the components which are to be connected together is a bearing shield.

## Revendications

1. Entraînement électrique (1), comportant des pièces (3, 4) qui sont reliées mutuellement par l'intermédiaire d'au moins une liaison par encliquetage (2) comprenant un moyen d'encliquetage (5) pouvant être dévié, qui est agencé en saillie sur une zone extérieure de l'entraînement électrique (1), et est sécurisé par un dispositif de sécurisation (6), à l'encontre d'une déviation involontaire du moyen d'encliquetage (5) et ainsi d'une interruption de la liaison par encliquetage (2), ensemble
dans lequel le dispositif de sécurisation (6) est d'un seul tenant avec l'une des pièces (3, 4) devant être reliées mutuellement,
et dans lequel le moyen d'encliquetage (5) pouvant être dévié forme, avec un pontet porte-balais d'un moteur à collecteur et une fiche de connexion ou un boitier de fiche de connexion, une pièce moulée par injection, en matière plastique, d'un seul tenant,
**caractérisé en ce que** le dispositif de sécurisation (6) est réalisé d'un seul tenant avec un moyen d'encliquetage fixe (7) et une pièce de boitier en métal moulé sous pression ayant été déformée par formage, ou une pièce de boitier découpée et pliée ayant été déformée par formage.

2. Entraînement électrique selon la revendication 1, **caractérisé en ce que** le dispositif de sécurisation (6) est réalisé sous la forme d'un pontet (10), qui surmonte ledit au moins un mentonnet d'encliquetage ou évidement d'encliquetage, en conservant un espace de dégagement (8).

3. Entraînement électrique (1), comportant des pièces (3, 4) qui sont reliées mutuellement par l'intermédiaire d'au moins une liaison par encliquetage (2) comprenant un moyen d'encliquetage (5) pouvant être dévié, qui est agencé en saillie sur une zone extérieure de l'entraînement électrique (1), et est sécurisé par un dispositif de sécurisation (6), à l'encontre d'une déviation involontaire du moyen d'encliquetage (5) et ainsi d'une interruption de la liaison par encliquetage (2), ensemble
dans lequel le dispositif de sécurisation (6) est d'un seul tenant avec l'une des pièces (3, 4) devant être reliées mutuellement,
et dans lequel le moyen d'encliquetage (5) pouvant être dévié forme, avec une fiche de connexion ou un boitier de fiche de connexion, une pièce moulée par injection, en matière plastique, d'un seul tenant,
**caractérisé en ce que** le dispositif de sécurisation (6) est réalisé d'un seul tenant avec un moyen d'encliquetage fixe (7) et une pièce de boitier en métal moulé sous pression ayant été déformée par formage, ou une pièce de boitier découpée et pliée ayant été déformée par formage, et le dispositif de sécurisation (6) est réalisé sous la forme d'un pontet (10), qui surmonte ledit au moins un moyen d'encliquetage fixe (7) réalisé sous la forme d'un mentonnet d'encliquetage ou d'un évidement d'encliquetage, en conservant un espace de dégagement (8).

4. Entraînement électrique selon la revendication 1, 2 ou la revendication 3, **caractérisé en ce que** le moyen d'encliquetage fixe (7) est au moins un mentonnet d'encliquetage ou un évidement d'encliquetage.

5. Entraînement électrique selon la revendication 1, 2, 3 ou la revendication 4, **caractérisé en ce que** dans le dispositif de sécurisation (6) en forme de pontet est évidé un espace de dégagement (9) correspondant audit au moins un mentonnet d'encliquetage.

6. Entraînement électrique selon la revendication 1, 2, 3, 4 ou la revendication 5, **caractérisé en ce que** la pièce moulée par injection, en matière plastique, est renforcée de fibres.

7. Entraînement électrique selon l'une au moins des revendications précédentes, **caractérisé en ce que** le moyen d'encliquetage (5) pouvant être dévié est réalisé sous la forme d'au moins un anneau d'encliquetage et, dans l'état monté, vient s'enclencher par complémentarité de formes, sous ledit au moins un mentonnet d'encliquetage.

8. Entraînement électrique selon l'une au moins des revendications précédentes, **caractérisé en ce que** le moyen d'encliquetage (5) pouvant être dévié est réalisé sous la forme d'au moins un mentonnet d'encliquetage.

9. Entraînement électrique selon l'une au moins des revendications précédentes, **caractérisé en ce que** dans l'état monté, le dispositif de sécurisation (6) présente une étendue plus importante que le moyen d'encliquetage pouvant être dévié, et, au moins dans la zone de sa plus grande déviation, c'est-à-dire dans sa zone d'extrémité, dépasse de celui-ci dans la direction d'assemblage et/ou la direction de déviation.

10. Entraînement électrique selon l'une au moins des revendications précédentes, **caractérisé en ce qu'**un joint d'étanchéité (12) est agencé entre les deux pièces (3, 4) à relier et assure leur étanchéité, la liaison d'encliquetage (2) pressant le joint d'étanchéité (12) entre les deux pièces (3, 4).

11. Entraînement électrique selon l'une au moins des revendications précédentes, **caractérisé en ce que** l'une des pièces (3, 4) à relier mutuellement, est réalisée d'un seul tenant avec un pontet porte-balais d'un moteur à collecteur.

12. Entraînement électrique selon l'une au moins des revendications précédentes, **caractérisé en ce que** la pièce (3, 4) accueille une plaque de circuit imprimé (13), qui est reliée électriquement et mécaniquement à des pattes de connexion enfichables (14), qui s'engagent à travers des évidements (15) dans le boitier de fiche de connexion (11).

13. Entraînement électrique selon l'une au moins des revendications précédentes, **caractérisé en ce que** la plaque de circuit imprimé (13) est reliée directement sur le plan électrique à l'une des pièces (3, 4) à relier mutuellement.

14. Entraînement électrique selon l'une au moins des revendications précédentes, **caractérisé en ce que** la plaque de circuit imprimé (13) est équipée de composants sur les deux faces et établit une liaison électrique entre des pattes de connexion enfichables (14) et des balais du moteur à collecteur.

15. Entraînement électrique selon l'une au moins des revendications précédentes, **caractérisé en ce que** les deux pièces (3, 4) à relier mutuellement sont des pièces de boitier.

16. Entraînement électrique selon l'une au moins des revendications précédentes, **caractérisé en ce que** l'une des pièces à relier mutuellement est un flasque de palier.
